# EUROPEAN PATENT APPLICATION

(11) **EP 2 728 886 A1**
(43) Date of publication of application: **07.05.2014**
(21) Application number: 12190771.1
(22) Date of filing: 31.10.2012
(51) Int. Cl.: H04N 9/82, H04N 5/77, G11B 20/00

(54) **Registering of timing data in video sequences**

(71) Applicant: EyeTrackShop AB, 111 35 Stockholm (SE)
(72) Inventor: NYHED, Lars, 187 46 Täby (SE)
(74) Representative: Wihlsson, Joakim Per Magnus

(57) **Abstract**

A well-defined sequence of visual stimuli (110), e.g. a video file, is presented via a display unit. In parallel, a recorded video sequence is generated, which preferably represents the face of a subject watching the well-defined sequence of visual stimuli (110). During the presentation of well-defined sequence of visual stimuli (110), linked data (1201, 1202, 1203, 1204, 1205, 1206, 1207) are read out, which indicate timing information relating to the well-defined sequence of visual stimuli (110). The linked data are registered as metadata (120M) associated with the recorded video sequence to produce a synchronized video file (120S), wherein each image (221, 222, 223, 224, 225, 226, 227) is associated to a particular piece of timing information from the linked data. Thus, for example biometric measures derived from the recorded video sequence can be synchronized with the well-defined sequence of visual stimuli (110).

## Description

### THE BACKGROUND OF THE INVENTION AND PRIOR ART

The present invention relates generally to solutions for synchronizing a video sequence to a given series of events. More particularly the invention relates to an apparatus according to the preamble of claim 1 and a method according to the preamble of claim 9. The invention also relates to a computer program product according to claim 17 and a computer readable medium according to claim 18.

The prior art includes various examples of solutions, wherein source data representing video, still images and/or sound are combined with one another, or with other types of data, in order to facilitate a subsequent data analysis.

US 2010/0226543 discloses a system and a method for video analysis, where a video file is combined with the result of a search query. The search result is displayed together with at least one video clip in a graphically structured manner, for instance in the form of thumbnail symbols arranged along a timeline.

US 2010/0321567 describes a video generating apparatus, which generates video data based on audio data and still image data. The audio data are input sequentially at fixed intervals. However, the image data are registered in a time series at irregular intervals. This means that, simultaneously with input of one frame of image data, a video generating apparatus starts a data acquisition process to obtain a next frame of image data. The video generating apparatus then stores audio data, which has been input in a period between a start of the data acquisition process and input of one frame of image data. Based thereon, resulting video data is generated.

### PROBLEMS ASSOCIATED WITH THE PRIOR ART

Although the above solutions may be advantageous for handling certain types of situations, they provide insufficient support for analyzing a recorded video sequence representing the face of a subject who watches a series of events, for instance presented on a computer display, with respect to the subject's reactions to these events. Namely, here, it is important to know exactly what was presented at a particular point in time in order to draw adequate conclusions based on the subject's facial features (e.g. expression and/or point-of-regard). In extreme cases, such biometric measures of the subject may change from one frame to another. Therefore, exact synchronism is a key issue. This particular problem has not been addressed in the prior art.

### SUMMARY OF THE INVENTION

The object of the present invention is to solve the above problem, and thus offer an uncomplicated and reliable means for aligning a well-defined series of visual stimuli with a recorded video sequence that has been generated in parallel with a presentation of the well-defined series of visual stimuli, so as to allow a high-quality analysis of the recorded video sequence in relation to the well-defined series of visual stimuli.

According to one aspect of the invention, the object is achieved by the initially described apparatus, wherein the apparatus further includes a readout unit and a registering unit. The readout unit is configured to read out linked data from the well-defined series of visual stimuli during the presentation of the well-defined series of visual stimuli via an output interface. The linked data indicates timing information relating to the well-defined series of visual stimuli. The registering unit is configured to register the linked data as metadata associated with the recorded video sequence to produce a synchronized video file, wherein each image is associated to a particular piece of timing information from the linked data.

This apparatus is advantageous because it provides a highly accurate linking between the well-defined series of visual stimuli and the moving image data of the recorded video sequence. Thus, a reliable analysis of a subject's reaction to a given image content having a specified chronological structure is enabled.

According to one preferred embodiment of this aspect of the invention, the well-defined series of visual stimuli includes: a video sequence, a particular series of events occurring in relation to at least one web page and/or an interactive user interface configured to be exhibited via the display unit. Thus, the apparatus can be used to analyze a wide variety of user-interface scenarios.

According to another preferred embodiment of this aspect of the invention, the linked data contains a series of timestamps describing a chronological order in which an amount of visual data in the well-defined series of visual stimuli is to be presented when the well-defined series of visual stimuli is played back. Thereby, the recorded video sequence is linked together with the well-defined series of visual stimuli in a very straightforward manner.

According to a further preferred embodiment of this aspect of the invention, the linked data contains acoustic data that is to be presented when the well-defined series of visual stimuli is played back. Provided that the well-defined series of visual stimuli has at least one associated audio track, such an acoustic linking is a highly efficient way to interrelate the data amounts represented by the well-defined series of visual stimuli and the recorded video sequence.

According to yet another preferred embodiment of this aspect of the invention, the apparatus includes a processing unit configured to incorporate the linked data into the synchronized video sequence in such a manner that, upon a subsequent playback of the synchronized video sequence, at least one portion of the linked data is perceivable by a human.

For example, a portion of the linked data containing timing data may be presented visually on a display unit together with the image data of the synchronized video sequence. Alternatively, or as a complement thereto, a portion of the linked data may include a bar code that is presented visually on the display unit together with the image data of the synchronized video sequence; or the linked data may include hidden pixel information. Thus, the time coding can either be apparent or indistinguishable to a human.

According to a further preferred embodiment of this aspect of the invention, it is presumed that the recorded video sequence represents the face of a subject. Here, a processing unit in the apparatus is configured to analyze the synchronized video sequence in order to derive at least one biometric measure from an image content therein. The biometric measure may represent eye tracking data (e.g. designating a gaze point) and/or facial coding data describing the subject's expression and/or an estimate of the subject's emotional state. The processing unit is configured to generate a result file containing the at least one biometric measure. Thus, based on the synchronized video sequence, the apparatus also presents processed data that can be used directly.

According to another aspect of the invention, the object is achieved by the method described initially, wherein linked data are read out from the well-defined series of visual stimuli during the presentation of the well-defined series of visual stimuli. The linked data indicate timing information relating to the well-defined series of visual stimuli. The method also involves registering the linked data as metadata associated with the recorded video sequence to produce a synchronized video sequence, wherein each image is associated to a particular piece of timing information from the linked data. The advantages of this method, as well as the preferred embodiments thereof, are apparent from the discussion above with reference to the proposed apparatus.

According to a further aspect of the invention the object is achieved by a computer program product, which is loadable into the memory of a computer, and includes software adapted to implement the method proposed above when said computer program product is run on a computer.

According to another aspect of the invention the object is achieved by a computer readable medium, having a program recorded thereon, where the program is to control a computer to perform the method proposed above when the program is loaded into the computer.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows an apparatus according to one embodiment of the invention;
- Figure 2: illustrates a relationship between a well-defined series of visual stimuli and a recorded video sequence synchronized thereto according to one embodiment of the invention;
- Figure 3: shows a first example of an image frame in a recorded video sequence to which timing data from a well-defined series of visual stimuli has been linked according to a first embodiment of the invention;
- Figure 4: shows a second example of an image frame in a recorded video sequence to which timing data from a well-defined series of visual stimuli has been linked according to a second embodiment of the invention; and
- Figure 5: illustrates, by means of a flow diagram, the general method according to the invention.

### DESCRIPTION OF PREFERRED EMBODIMENTS OF THE INVENTION

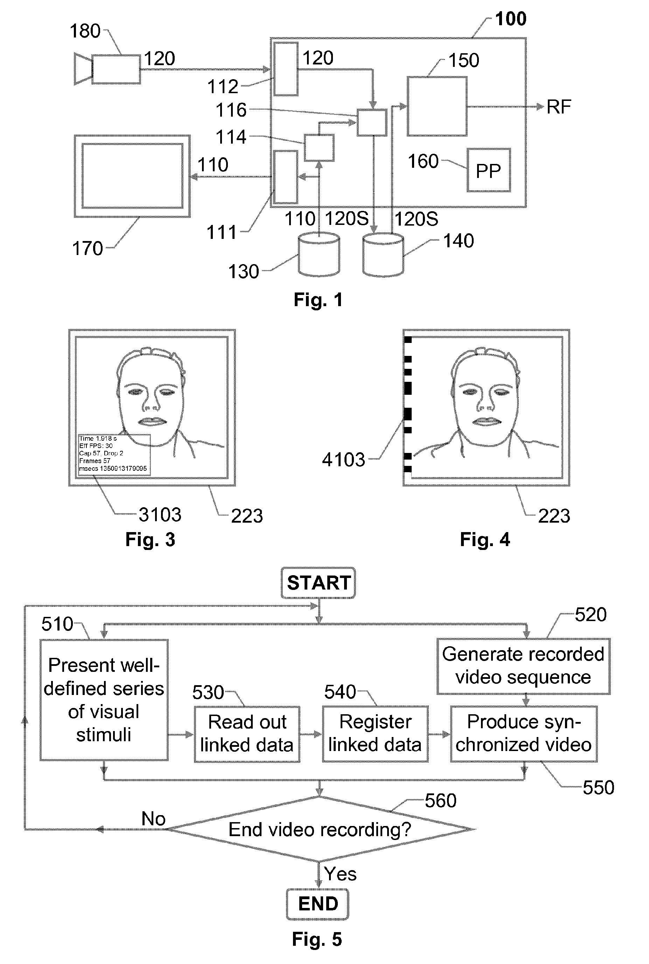

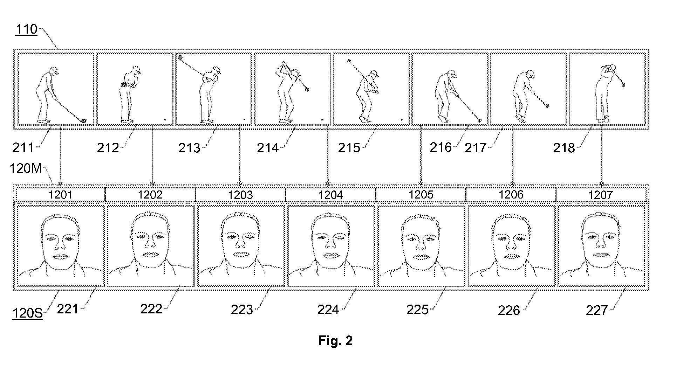

Figure 1 shows an apparatus 100 according to one embodiment of the invention. Figure 2 illustrates an example of a relationship between a well-defined series of visual stimuli 110 (e.g. a video sequence presented via the apparatus 100 of Figure 1) and a synchronized video sequence 120S (e.g. recorded via the apparatus 100 in Figure 1).

The apparatus 100 includes an output interface 111, an input interface 112, a readout unit 114 and a registering unit 116. Preferably, a processing unit 150, a memory unit 160 and/or one or more storage areas 130 and 140 are also included in the apparatus 100.

The output interface 111 is configured to forward the well-defined series of visual stimuli 110 for presentation via a display unit 170 (e.g. a computer screen, a projector screen or a TV screen) connected to the apparatus 100. Typically, the well-defined series of visual stimuli 110 contains a video sequence. However, technically, the well-defined series of visual stimuli 110 may include any other series of visual events occurring on the display unit 170. Of course, such a series of events, in turn, may be fed into the apparatus 100 in the form of a video sequence. It nevertheless also possible that the well-defined series of visual stimuli 110 represents other types of events in relation to at least one web page and/or an interactive user interface configured to be exhibited via the display unit 170.

The well-defined series of visual stimuli 110 may be stored in a storage unit 130, such as a disk drive, included in, or in communicative connection with the apparatus 100.

The input interface 112 is configured to receive the recorded video sequence 120 generated in parallel with the presentation of the well-defined series of visual stimuli 110 on the display unit 170. Preferably, a camera unit 180 directed towards a head region of a subject watching the well-defined series of visual stimuli 110 generates the recorded video sequence 120, and delivers this data to the input interface 112 in real time.

The readout unit 114 is configured to read out linked data from the well-defined series of visual stimuli 110 during the presentation thereof via the output interface 111. To this aim, the well-defined series of visual stimuli 110 is passed in parallel to the output interface 111 and the readout unit 114. Figure 2 shows the linked data in the form of data pieces 1201, 1202, 1203, 1204, 1205, 1206 and 1207. The linked data indicates timing information relating to the well-defined series of visual stimuli 110. I.e. the linked data may represent a series of timestamps, or other data carrying temporal information, e.g. acoustic data, describing a chronological order in which an amount of visual data in the well-defined series of visual stimuli 110 is to be presented when the well-defined series of visual stimuli 110 is played back.

The registering unit 116 is configured to receive the recorded video sequence 120, receive the well-defined series of visual stimuli 110, register the linked data 1201, 1202, 1203, 1204, 1205, 1206 and 1207 as metadata 120M associated with the recorded video sequence 120, and as a result, produce a synchronized video sequence 120S. Specifically, the registering unit 116 is configured to register the linked data 1201, 1202, 1203, 1204, 1205, 1206 and 1207 in the synchronized video sequence 120S in such a manner that each image 221, 222, 223, 224, 225, 226 and 227 respectively therein is associated to a particular piece of timing information from the linked data 1201, 1202, 1203, 1204, 1205, 1206 and 1207 unambiguously linking a given image 211, 212, 213, 214, 216, 217 and 218 from the well-defined series of visual stimuli 110 to an image 221, 222, 223, 224, 225, 226 and 227 respectively in the recorded video sequence 120.

Naturally, the display unit 170 and/or the camera unit 180 may also be included in the apparatus 100, which is typically the case if the apparatus 100 is implemented in a laptop computer, a tablet computer, an ultrabook, an all-in-one desktop computer, a smartphone or similar.

A processing unit 150 in the apparatus 100 may be configured to incorporate the linked data 1201, 1202, 1203, 1204, 1205, 1206 and 1207 into the synchronized video sequence 120S in such a manner that, upon a subsequent playback of the synchronized video sequence 120S, at least one portion of the linked data 1201, 1202, 1203, 1204, 1205, 1206 and 1207 is perceivable by a human. Figure 3 shows one such example of the third image 223 from the synchronized video sequence 120S. Here, timing data (for example expressing: an elapsed time: 1.918 seconds, an effective frame rate of 30 frames per second, 57 captured frames, 2 dropped frames and a time count 1350913179095) from the well-defined series of visual stimuli 110 is linked to the third image 223. Here, this information appears in a visible window 3103. Of course, the same or similar data may equally well be included as hidden pixel information in the third image 223.

Figure 4 shows another example of the third image frame 223 in the synchronized video sequence 120S, however where the timing data from the well-defined series of visual stimuli 110 has been linked thereto via a bar code 4103 configured to be presented visually on a display unit together with the image data of the synchronized video sequence 120S. This approach facilitates exact and simple time alignment between the well-defined series of visual stimuli 110 and the recorded video sequence 120.

As mentioned earlier, one important reason for creating such an alignment is to enable analysis of a subject's reactions in response to the contents of the well-defined series of visual stimuli 110. Therefore, according to one preferred embodiment of the invention, the processing unit 150 is also configured to derive at least one biometric measure from image content in the synchronized video sequence 120S. This may either be effected on the fly as the synchronized video sequence 120S is produced, or at any later point in time. In the latter case, a stored version of the synchronized video sequence 120S is preferably read out (e.g. from a storage unit 140 in communicative connection with the apparatus 100) into the processing unit 150. The biometric measure(s) may represent eye tracking data (e.g. the positions of the subject's eyes and/or the coordinates for a point-of-regard for the subject's gaze) and/or facial coding data describing the subject's facial expression and/or an interpretation of an emotional state associated thereto. In any case, the processing unit 150 is configured to generate a result file RF containing the biometric measure(s).

Preferably, the apparatus 100 contains, or is communicatively connected to, a memory unit 160 storing a computer program product PP, which contains software for controlling the apparatus 100 to perform the above-described actions when the computer program product PP is run on the processing unit 150.

In order to sum up, we will now describe the general method according to the invention with reference to the flow diagram in Figure 5.

In a first step 510, a well-defined series of visual stimuli 110 is presented via a display unit 170, such that the image content thereof becomes visible to a subject. A step 520 parallel to step 510, generates a recorded video sequence 120, preferably representing the subject's face. Further in parallel with step 510, temporal data linked to the well-defined series of visual stimuli 110 are read out, and in a step 540, these data are registered as metadata associated with the recorded video sequence 120. As a result, in a step 550, a synchronized video sequence 120S is produced, wherein there is an unambiguous linking between the well-defined series of visual stimuli 110 and the individual images of the recorded video sequence 120.

Then, a step 560 checks if the generation of the recorded video sequence 120 shall be stopped. If so, the procedure ends; otherwise the procedure loops back to steps 510, 520, 530, 540 and 550 for continued recording.

All of the process steps, as well as any sub-sequence of steps, described with reference to Figure 5 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EP-ROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. An apparatus for registering timing data in a video sequence, the apparatus comprising:
an output interface (111) configured to forward a well-defined series of visual stimuli (110) for presentation via a display unit (170) connected to the apparatus,
an input video interface (112) configured to receive a recorded video sequence (120) generated in parallel with the presentation of the well-defined visual stimuli (110) via a display unit (170) connected to the apparatus, **characterized in that** the apparatus further comprises:
a readout unit (114) configured to read out linked data (1201, 1202, 1203, 1204, 1205, 1206, 1207) from the well-defined series of visual stimuli (110) during the presentation of the well-defined series of visual stimuli (110) via the output interface (111), the linked data indicating timing information relating to the well-defined series of visual stimuli (110); and
a registering unit (116) configured to register the linked data as metadata (120M) associated with the recorded video sequence (120) to produce a synchronized video sequence (120S), wherein each image (221, 222, 223, 224, 225, 226, 227) is associated to a particular piece of timing information from the linked data.

2. The apparatus according to claim 1, wherein the well-defined series of visual stimuli (110) comprises at least one of: a video sequence; a particular series of events occurring in relation to at least one web page; and an interactive user interface configured to be exhibited via the display unit (170).

3. The apparatus according to any one of claims 1 or 2, wherein the linked data (1201, 1202, 1203, 1204, 1205, 1206, 1207) comprises a series of timestamps describing a chronological order in which an amount of visual data in the well-defined series of visual stimuli (110) is to be presented when the well-defined series of visual stimuli (110) is played back.

4. The apparatus according to any one of preceding claims, wherein the linked data (1201, 1202, 1203, 1204, 1205, 1206, 1207) comprises acoustic data that is to be played back in parallel with a visual presentation of the recorded video sequence (120) on a display unit.

5. The apparatus according to any one of the preceding claims, comprising a processing unit (150) configured to incorporate the linked data (1201, 1202, 1203, 1204, 1205, 1206, 1207) into the synchronized video sequence (120S) in such a manner that, upon a subsequent playback of the synchronized video sequence (120S), at least one portion of the linked data is perceivable by a human.

6. The apparatus according to claim 5, wherein the at least one portion of the linked data (1201, 1202, 1203, 1204, 1205, 1206, 1207) comprises timing data (3103) configured to be presented visually on a display unit together with the image data of the synchronized video sequence (120S).

7. The apparatus according to any one of claims 5 or 6, wherein the at least one portion of the linked data (1201, 1202, 1203, 1204, 1205, 1206, 1207) comprises a bar code (4103) configured to be presented visually on a display unit together with the image data of the synchronized video sequence (120).

8. The apparatus according to any one of the preceding claims, further a processing unit (150) configured to:
analyze the synchronized video sequence (120S) to derive at least one biometric measure from an image content therein, the at least one biometric measure representing at least one of eye tracking data and facial coding data; and
generate a result file (RF) containing the at least one biometric measure.

9. A method of registering timing data in a video sequence, the method comprising:
presenting a well-defined series of visual stimuli (110) via a display unit (170),
generating, in parallel with the presentation of the well-defined series of visual stimuli (110), a recorded video sequence (120), **characterized by**
reading out linked data (1201, 1202, 1203, 1204, 1205, 1206, 1207) from the well-defined series of visual stimuli (110) during the presentation of the well-defined series of visual stimuli (110), the linked data indicating timing information relating to the well-defined series of visual stimuli (110); and
registering the linked data as metadata (120M) associated with the recorded video sequence (120) to produce a synchronized video sequence (120S), wherein each image is associated to a particular piece of timing information from the linked data.

10. The method according to claim 9, wherein the well-defined series of visual stimuli (110) comprises at least one of: a video sequence; a particular series of events occurring in relation to at least one web page; and an interactive user interface configured to be exhibited via the display unit (170).

11. The method according to any one of claims 9 or 10, wherein the linked data comprises a series of timestamps describing a chronological order in which an amount of visual data in the well-defined series of visual stimuli (110) is presented when the well-defined series of visual stimuli (110) is played back.

12. The method according to any one of claims 9 to 11, wherein the linked data comprises acoustic data that is to be played back in parallel with a visual presentation of the synchronized video sequence (120S) on a display unit.

13. The method according to any one of claims 9 to 12, comprising incorporating the linked data (1201, 1202, 1203, 1204, 1205, 1206, 1207) into the synchronized video sequence (120S) in such a manner that, upon a subsequent playback of the synchronized video sequence (120S), at least one portion of the linked data is perceivable by a human.

14. The method according to claim 13, wherein the at least one portion of the linked data (1201, 1202, 1203, 1204, 1205, 1206, 1207) comprises timing data (3103) configured to be presented visually on a display unit together with the image data of the synchronized video sequence (120S).

15. The method according to any one of claims 13 or 14, wherein the at least one portion of the linked data (1201, 1202, 1203, 1204, 1205, 1206, 1207) comprises a bar code (4103) configured to be presented visually on a display unit together with the image data of the synchronized video sequence (120S).

16. The method according to any one of claims 9 to 15, further comprising:
analyzing the synchronized video sequence (120S) to derive at least one biometric measure from an image content therein, the at least one biometric measure representing at least one of eye tracking data and facial coding data; and
generating a result file (RF) containing the at least one biometric measure.

17. A computer program product (PP) loadable into the internal memory (160) of a computer, comprising software for controlling the steps of any of the claims 9 to 16 when the computer program product (PP) is run on the computer.

18. A computer readable medium (160), having a program recorded thereon, where the program is to make a computer control the steps of any of the claims 9 to 16.
